# EUROPEAN PATENT SPECIFICATION

(11) **EP 3 809 827 B1**
(45) Date of publication and mention of the grant of the patent: **26.06.2024**
(21) Application number: 19727640.5
(22) Date of filing: 28.05.2019
(51) Int. Cl.: A01C 1/02, A01G 31/06, A01G 31/02, A01G 9/02

(54) **PLANT GROWING CABINET WITH DISPLAY DEVICE**
PFLANZENZUCHTKASTEN MIT ANZEIGGERÄT
CABINET DE CULTURE DE PLANTES AVEC DISPOSITIF D'AFFICHAGE

(30) Priority: 21.06.2018 TR 201808846
(43) Date of publication of application: 28.04.2021
(73) Proprietor: Arçelik Anonim Sirketi, 34445 Istanbul (TR)
(72) Inventor: ATICI, Omer Alp, 34950 ISTANBUL (TR); APAYDIN, Tolga, 34950 ISTANBUL (TR); KARAKAYA, Erkan, 34950 ISTANBUL (TR); BAKYUZ, Murat, 34950 ISTANBUL (TR); YESILDAG, Osman, 34950 ISTANBUL (TR); DINC, Ahmet, 34950 ISTANBUL (TR)
(86) International application number: PCT/EP2019/063778
(87) International publication number: WO 2019/243004

(56) References cited:
- EP-A1- 0 287 284
- WO-A1-2015/117685
- WO-A2-2018/063132
- US-A1- 2016 029 574

## Description

The present invention relates to a plant growing cabinet in which the seeds of plants to be grown are inseminated.

Nowadays, plant growing cabinets have found wide usage to meet the increasing needs of healthy nutrition and accessing fresh food products. Hydrophonic cultivation is a method of agriculture based on growing plants without soil, depends on the principle of giving water and the nutrients required by the plants, to the root environment in required amounts, and is practiced in water or solid medium culture. The plants to be grown in soilless agriculture applications are cultivated in an enclosed environment in which the levels of water, light, humidity, and the proportion of carbon dioxide is adjusted according to the growth phase of said plants. During growing of a plant, all these elements are optimized according to the plant's growth phase, and the plant is thus enabled to grow more rapidly and is protected from harmful outer environment elements (e.g. high levels of humidity, drought, light intensity). They tray used in plant growing cabinets, in which turf mixture or similar mixtures are placed, are covered by a lid to increase germination ratio of seeds. The relative humidity of the volume below the lid thus increases, yielding a high germination ratio. One problem experienced in lid usage is air with high relative humidity causing condensation on lid surface. Condensed water vapor returns back to turf mixture as droplets from the side surfaces of the lid. High relative humidity and water droplets reaching turf mixture increase humidity of turf mixture. Consequently, fungus and mold like undesired microbial formations are observed, likely to damage the plants cultivated in turf mixture. High turf humidity and foreign organism formation may lead to deterioration and therefore irreversible permanent damages of the cultivated plants.

State of the art Korean patent document no. KR20130029193 discloses a domestic type plant growing cabinet.

State of the art U.S. patent document no. US2011219683 discloses a domestic type plant growing cabinet. State of the art WO2015117685 A1 discloses a system and method for producing plants. State of the art European patent document no. EP 0287 284 discloses a sterile propagation system, particularly, but not exclusively, intended for the micropropagation of plants. State of the art U.S. patent document no. US2016029574 discloses a family-style plant growth technology, in particular to a plant growth system. The aim of the present invention is to realize a plant growing cabinet in which relative humidity between a tray and a lid is kept under control.

The plant growing cabinet realized to achieve the aim of the present invention and disclosed in the first claim and the dependent claims, is provided with a body and a plurality of plant growing units placed in the body so as to be consecutively arranged in vertical direction. Trays with perforated bases are placed in said units, in which is placed the turf mixture enabling growing the plants to be cultivated. During watering of the plants, nutritious liquid is transmitted into the unit, nutritious liquid passing through the perforations enters the tray and humidifies the turf. The nutritious liquid in the unit is discharged upon completion of the watering process. The turf mixture is isolated from the internal volume of the body by means of the lid placed on the tray. Placement of the lid on the tray entraps relative humidity in the volume between the tray and the lid. Germination ratio of seeds is thus improved. Air is circulated in the body by means of a fan provided in the body. Likewise, air is transferred between the outer environment and the body internal volume also by means of the fan, which enables introduction of fresh air therein from the outer environment. The visual data of the plants grown in the lower one of the two consecutively arranged trays is transmitted in real time to the control unit by means of an imaging device positioned on the lower surface of the upper tray so as to view the lid from above. The control unit compares the received visual data with the data saved in its memory by the producer, and determines whether there is condensation on the inner surface of the lid. In case condensation is detected, the control unit activates the fan, enabling creating an air flow in the body. The air flow discharges the air with high relative humidity between the lid and the tray, minimizing or eliminating condensation. Air flow rate is enabled to be adjusted by means of the open and closed position of the vent cover provided on the lid. Condensation may form as a layer of fine film or droplets, or may be partial depending on the amount of relative humidity. These cases imply different relative humidity proportions. Therefore, the control unit may change the fan speed. Rapid discharging of relative humidity from the environment prevents condensation from dripping on turf mixture and therefore inhibits increasing of turf mixture humidity, enabling averting formation of fungus, mold and similar harmful organisms due to high humidity. By this, the cultivated plants are protected from being damaged and perceived quality is enhanced.

In an embodiment of the invention, the control unit decides that the humidity of turf mixture is below a desired value if it determines by means of the data provided by the imaging device, nonexistence of condensation throughout a duration predetermined by the producer. Consequently, the control unit enables water transmission into the unit or alerts the user by means of its visual or audible signaling means. This enables preventing damaging of the cultivated plants due to being dried.

In an embodiment of the invention, growth watering system is controlled according to the condensation formation on the lid. For instance, the tray with the turf is watered from below if there is no condensation. When condensation continues for a long duration, watering is either not performed until the lid is removed or is postponed.

In an embodiment of the invention, the air flow rate through the vent cover can be adjusted manually. The user can manually shift the vent cover from closed position to open position upon recognizing condensation on the inner surface of the lid or upon the control unit alerting the user visually or audibly by means of the signaling means. The simple, manually adjustable structure of the vent cover eliminates the necessity to use complex components, reducing spare part costs.

In an embodiment of the invention, the air flow rate through the vent cover can be adjusted by a solenoid actuator. Solenoid actuator usage enables automating control of the vent cover, minimizing user intervention requirements. By this, likely user-related usage errors are avoided and convenience of use is provided for the users.

In an embodiment of the invention, photovoltaic cells are provided on the vent cover. Electricity is generated by means of light reaching the photovoltaic cells, which is used to energize the solenoid actuator. This eliminates the necessity to transmit electricity by cable to the solenoid actuator, improving the number of parts used in the plant growing cabinet and therefore the product costs.

In an embodiment of the invention, the solenoid actuator and the control unit are capable of wireless communication by means of their receiver and transmitters. If the control unit determines condensation on the inner surface of the lid according to visual data received from the imaging device, it activates solenoid actuator by establishing wireless communication with the solenoid actuator and increases the air flow rate through the vent cover. This eliminates the necessity of installing a cable connection between the control unit and the solenoid actuator, improving the number of parts used and therefore the product costs.

In an embodiment of the invention, the control unit is adapted to connect with smart phones, computers, tablet computers or similar wireless communication devices of users by means of its receiver and transmitter. This enables the users to connect by remote access to the plat growing cabinet and to get information about the operation status of the plant growing cabinet.

The present invention enables detecting condensation likely to damage sprouts in germination phase, occurring on the lid in a plant growing cabinet, by processing data received from the imaging device by means of the control unit. Excess humidity inducing condensation is discharged from the environment by means of the fan activated by the control unit upon detecting condensation, inhibiting fungus and mold formation on the turf mixture likely to damage the plants.

The plant growing cabinet realized to achieve the aims of the present invention is illustrated in the accompanying drawings, wherein:

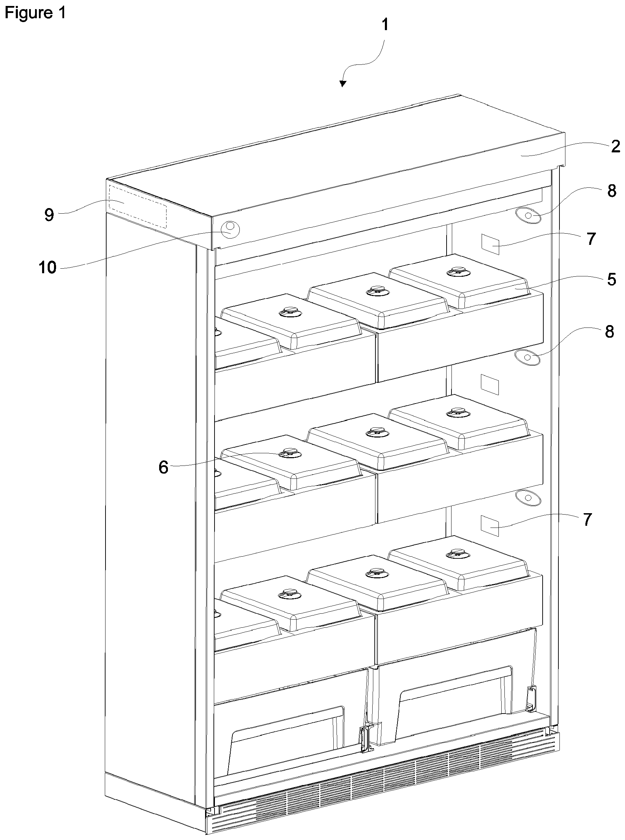

Figure 1 is a frontal view of the plant growing cabinet.

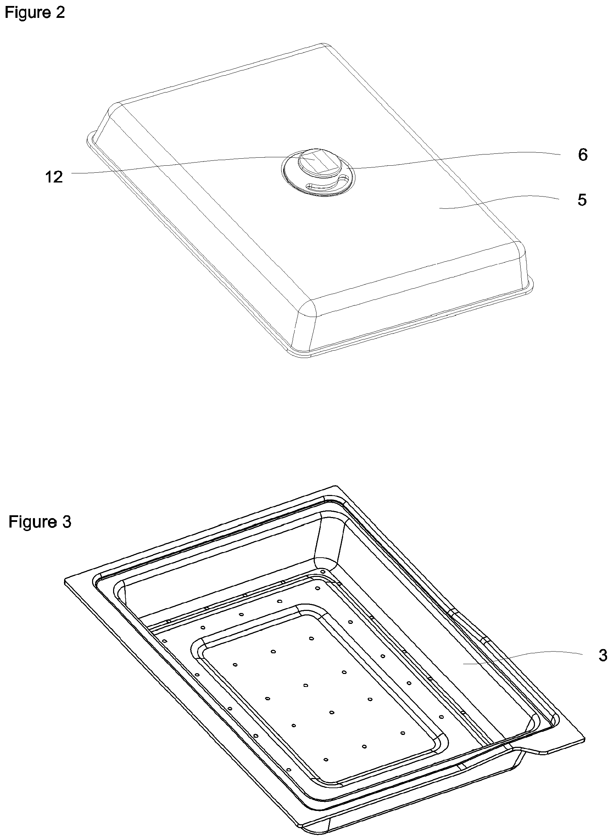

Figure 2 is a perspective view of the lid.
Figure 3 is a perspective view of the tray.

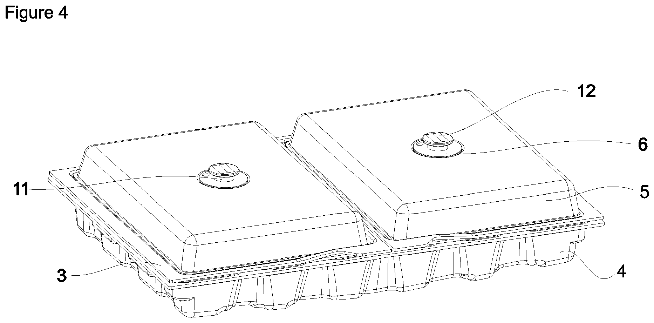

Figure 4 is a perspective view of the unit, and the tray and lid placed on the unit.

The elements in the figures are numbered individually and the correspondence of these numbers are given hereinafter.
1. Plant growing cabinet
2. Body
3. Tray
4. Unit
5. Lid
6. Vent cover
7. Fan
8. Imaging device
9. Control unit
10. Signaling means
11. Solenoid driver
12. Photovoltaic cell

The plant growing cabinet (1) of the invention comprises a body (2), at least one tray (3) with a perforated base, suitable for placing therein a turf mixture enabling the cultivated plants to grow, at least one plant growth unit (4) in which, during watering of the plants, nutrition liquid is transmitted into the unit (4), the liquid passing through the perforations of the at least one tray (3) placed in the unit (4), entering the tray (3) and humidifying the turf mixture, , a lid (5) placed on the tray (3), enabling forming the relative humidity conditions suitable for germination of plants by entrapping the liquid evaporating from the turf mixture in the volume in between itself and the tray (3), at least one fan (7) enabling air circulation in the body (2), at least one vent cover (6) provided on the lid (5), enabling the user to adjust air flow rate therethrough by having an open position allowing air to pass therethrough and a closed position blocking air passage, at least one imaging device (8) positioned so as to view the lid (5) from above and a control unit (9) to which data received from the imaging device (8) is transmitted, comparing the transmitted data with the data saved in its memory by the producer, activating the fan (7) upon determining condensation on the lid (5) and controlling the fan speed. Data received from the imaging device (8) is transmitted as signals to the control unit (9). The control unit (9) compares the received visual data with the data saved in its memory by the producer. If the control unit (9) determines according to said comparison, presence of condensation on the inner surface of the lid (5), it energizes the fan (7). The air flow generated by the operation of the fan (7) conveys the air mass with high relative humidity present in the internal volume of the body (2) outside the body (2). Air with high relative humidity in the volume between the lid (5) and the tray (3) is thus replaced with air with comparatively low relative humidity. Particularly in open position of the vent cover (6), relative humidity present in between the lid (5) and the tray (3) is rapidly discharged from the environment. Occurrence of conditions such as fungus and mold formation likely to have adverse effects on seed germination and plant growth is thus averted.

In another embodiment of the invention, the plant growing cabinet (1) comprises a control unit (9) determining by assessing the data from the imaging device (8), whether the condensation occurring in the lid (5) is partial or in a fine film or droplet form and adjusting the air flow rate of the fan (7) accordingly.

In another embodiment of the invention, the plant growing cabinet (1) comprises a control unit (9) which, upon determining condensation energizes at least one signaling means (10) alerting the user to manually shift the vent cover (6) to open position. The lid (5) isolates the tray (3) from the outer environment in a substantially air-tight manner. Therefore, in cases when the fan (7) is being operated, discharging the relative humidity between the lid (5) and the tray (3) may take longer than desired. The control unit (9) alerts the user by means of the signaling means (10). Said relative humidity is rapidly discharged from the environment upon the user bringing the vent cover (6) to open position. In cases when relative humidity is desired to be maintained, the user manually brings the vent cover (6) to closed position or to a partially open position. The user is thus enabled to control relative humidity, preventing seed from being damaged during germination by drying or by being subjected to mold or fungus.

In another embodiment of the invention, the plant growing cabinet comprises a lid (5) having a vent cover (6) in which the air flow therethrough can be adjusted by means of the control unit (9). As a result, necessity of user intervention is minimized and convenience of use is provided while avoiding likely user-related usage errors.

In another embodiment of the invention, the plant growing cabinet (1) comprises a lid (5) having a vent cover (6) in which the air flow therethrough can be adjusted by means of a solenoid actuator (11). The user is not required to intervene the vent cover (6) and the vent cover (6) can be automatically opened and closed by means of solenoid actuator (11) usage, thereby providing convenience of use.

In another embodiment of the invention, the plant growing cabinet comprises a vent cover (6) having at least one photovoltaic cell (12) energizing the solenoid actuator (11). The photovoltaic cell (12) provided on the vent cover (6) energizes the solenoid actuator (11). Thus, there is no need for a cable passing through the lid (5) to energize the solenoid actuator (11), avoiding costs to be incurred by additional parts.

In another embodiment of the invention, the plant growing cabinet comprises a vent cover (6) capable of wireless communication with the control unit (9). The solenoid actuator (11) adjusts the air flow rate through the vent cover (6) between open position and closed position according to signals from the control unit (9). Wireless communication capability of the vent cover (6) and the control unit (9) reduces the number of cables and connecting pieces, thereby providing cost advantage.

In another embodiment of the invention, the plant growing cabinet (1) comprises a control unit (9) adapted to establish connection with wireless communication devices. The control unit (9) is adapted to connect with wireless communication enabled devices of the user by means of its at least one transmitter and receiver. The user is thus enabled get information about relative humidity inside the plant growing cabinet (1) and to intervene when necessary when he/she is away from the plant growing cabinet (1).

In the plant growing cabinet (1) of the invention, transmission of images of condensation forming on the inner surface of the lid (5) to the control unit (9) by means of the imaging device (8), enables activating the fan (7) and discharging the air with high relative humidity in between the lid (5) and the tray (3), preventing fungus and mold-like formations on the turf mixture.

## Claims

1. A plant growing cabinet (1) **comprising**
• a body (2),
• at least one tray (3) with a perforated base, suitable for placing therein a turf mixture enabling cultivated plants to grow,
• at least one plant growth unit (4) in which, during watering of the plants, nutrition liquid is transmitted into the unit (4), the liquid passing through perforations of the at least one tray (3) placed in the unit (4), entering the tray (3) and humidifying the turf mixture,
• a lid (5) placed on the tray (3), enabling forming the relative humidity conditions suitable for germination of plants by entrapping the liquid evaporating from the turf mixture in the volume in between itself and the tray (3),
• at least one fan (7) enabling air circulation in the body (2) and
• **characterized by**
• at least one vent cover (6) provided on the lid (5), enabling the user to adjust air flow rate therethrough by having an open position allowing air to pass therethrough and a closed position blocking air passage,
• at least one imaging device (8) positioned so as to view the lid (5) from above,
• a control unit (9) to which visual data received from the imaging device (8) is transmitted, comparing the transmitted data with the data saved in its memory by the producer, activating the fan (7) upon determining condensation on the lid (5) and controlling the fan speed.

2. A plant growing cabinet (1) according to claim 1, **characterized by** the control unit (9) energizing upon determining condensation, at least one signaling means (10) which alerts the user to manually shift the vent cover (6) to open position.

3. A plant growing cabinet (1) according to claim 1, **characterized by** the lid (5) having a vent cover (6) in which the air flow therethrough can be adjusted by means of the control unit (9).

4. A plant growing cabinet (1) according to claim 3, **characterized by** the lid (5) having a vent cover (6) in which the air flow therethrough can be adjusted by means of a solenoid actuator (11).

5. A plant growing cabinet (1) according to claims 3 to 4, **characterized by** the vent cover (6) having at least one photovoltaic cell (12) energizing the solenoid actuator (11).

6. A plant growing cabinet (1) according to claims 3 to 5, **characterized by** the vent cover (6) capable of wireless communication with the control unit (9).

7. A plant growing cabinet (1) according to any one of the preceding claims, **characterized by** the control unit (9) adapted to establish connection with wireless communication devices.

## Patentansprüche

1. Ein Pflanzenzuchtschrank (1) **umfasst**
• einen Körper (2),
• mindestens eine Schale (3) mit perforiertem Boden, in die eine Rasenmischung eingebracht werden kann, die das Wachstum von Kulturpflanzen ermöglicht,
• mindestens eine Pflanzenwachstumseinheit (4), in der während der Bewässerung der Pflanzenwachstumseinheit (4) geleitet wird, wobei die Flüssigkeit durch Perforationen der mindestens einen in der Einheit (4) angeordneten Schale (3) in die Schale (3) gelangt und die Rasenmischung befeuchtet,
• einen Deckel (5), der auf die Schale (3) aufgesetzt wird und es ermöglicht, die für die Keimung der Pflanzen geeigneten Bedingungen der relativen Feuchtigkeit zu schaffen, indem er die aus der Rasenmischung verdampfende Flüssigkeit in dem Volumen zwischen sich und der Schale (3) einschließt,
• mindestens ein Ventilator (7), der die Luftzirkulation im Körper (2) ermöglicht, und
• **gekennzeichnet ist es durch**
• mindestens eine Lüftungsabdeckung (6), die auf dem Deckel (5) vorgesehen ist und es dem Benutzer ermöglicht, die Luftdurchflussrate einzustellen, indem sie eine offene Position hat, die den Luftdurchlass ermöglicht, und eine geschlossene Position, die den Luftdurchlass blockiert,
• mindestens eine Anzeigevorrichtung (8), die so angeordnet ist, dass sie den Deckel (5) von oben betrachten kann,
• eine Steuereinheit (9), an die von der Anzeigevorrichtung (8) empfangene visuelle Daten übertragen werden, die die übertragenen Daten mit den vom Hersteller in ihrem Speicher gespeicherten Daten vergleicht, das Ventilator (7) bei Feststellung von Kondensation auf dem Deckel (5) aktiviert und die Gebläsegeschwindigkeit steuert.

2. Ein Pflanzenzuchtschrank (1) , wie in Anspruch 1 aufgeführt, **ist dadurch gekennzeichnet, dass** die Steuereinheit (9) bei Feststellung von Kondenswasserbildung mindestens ein Signalmittel (10) aktiviert, das den Benutzer auffordert, die Lüftungsabdeckung (6) manuell in die offene Position zu bringen.

3. Ein Pflanzenzuchtschrank (1), wie in Anspruch 1 aufgeführt, ist **dadurch gekennzeichnet, dass** der Deckel (5) eine Lüftungsabdeckung (6) aufweist, bei der die Luftströmung mittels der Steuereinheit (9) eingestellt werden kann.

4. Ein Pflanzenzuchtschrank (1), wie in Anspruch 3 aufgeführt, ist **dadurch gekennzeichnet, dass** der Deckel (5) eine Lüftungsabdeckung (6) aufweist, bei der die Luftströmung mittels eines Magnetantrieb (11) eingestellt werden kann.

5. Ein Pflanzenzuchtschrank (1), wie in einem der Ansprüche 3 bis 4 aufgeführt, **ist dadurch gekennzeichnet, dass** die Lüftungsabdeckung (6) mindestens eine photovoltaische Zelle (12) aufweist, die den Magnetantrieb (11) mit Energie versorgt.

6. Ein Pflanzenzuchtschrank (1), wie in einem der Ansprüche 3 bis 5 aufgeführt, **ist dadurch gekennzeichnet, dass** der Lüftungsabdeckung (6) mit der Steuereinheit (9) drahtlos kommunizieren kann.

7. Ein Pflanzenzuchtschrank (1), wie in einem der vorherigen Ansprüchen aufgeführt, **ist dadurch gekennzeichnet, dass** die Steuereinheit (9) geeignet ist, eine Verbindung mit drahtlosen Kommunikationsgeräten herzustellen.

## Revendications

1. Armoire de culture végétale (1) **comprenant**
• un corps (2),
• au moins un plateau (3) avec une base perforée, adapté pour placer dans celui-ci un mélange de gazon permettant la croissance de plantes cultivées,
• au moins une unité de croissance de plante (4) dans laquelle, lors de l'arrosage des plantes, un liquide nutritif est transmis dans l'unité (4), le liquide passant à travers les perforations du ou des plateaux (3) placés dans l'unité (4), pénétrant dans le plateau (3) et humidifiant le mélange de gazon,
• un couvercle (5) placé sur le plateau (3), permettant de former des conditions d'humidité relative adaptées à la germination des plantes en piégeant le liquide s'évaporant du mélange de gazon dans le volume entre lui-même et le plateau (3),
• au moins un ventilateur (7) permettant la circulation de l'air dans le corps (2) et
• **caractérisée par**
• au moins un couvercle de ventilation (6) disposé sur le couvercle (5), permettant à l'utilisateur de régler le débit d'air à travers celui-ci en ayant une position ouverte permettant à l'air de passer à travers et une position fermée bloquant le passage de l'air,
• au moins un dispositif d'affichage (8) positionné de manière à voir le couvercle (5) depuis le dessus,
• une unité de commande (9) à laquelle des données visuelles reçues en provenance du dispositif d'affichage (8) sont transmises, comparant les données transmises avec les données enregistrées dans sa mémoire par le producteur, activant le ventilateur (7) lors de la détermination de la condensation sur le couvercle (5) et contrôlant la vitesse du ventilateur.

2. Armoire de culture végétale (1) selon la revendication 1, **caractérisée en ce que** l'unité de commande (9) s'active lors de la détection de condensation, au moins un moyen de signalisation (10) alertant l'utilisateur pour déplacer manuellement le couvercle de ventilation (6) en position ouverte.

3. Armoire de culture végétale (1) selon la revendication 1, **caractérisée en ce que** le couvercle (5) comporte un couvercle de ventilation (6) à travers lequel le flux d'air peut être ajusté au moyen de l'unité de commande (9).

4. Armoire de culture végétale (1) selon la revendication 3, **caractérisée en ce que** le couvercle (5) comporte un couvercle de ventilation (6) à travers lequel le flux d'air peut être ajusté au moyen d'un actionneur à solénoïde (11).

5. Armoire de culture végétale (1) selon les revendications 3 à 4, **caractérisée en ce que** le couvercle de ventilation (6) comporte au moins une cellule photovoltaïque (12) alimentant l'actionneur à solénoïde (11).

6. Armoire de culture végétale (1) selon les revendications 3 à 5, **caractérisée en ce que** le couvercle de ventilation (6) est capable de communication sans fil avec l'unité de commande (9).

7. Armoire de culture végétale (1) selon l'une quelconque des revendications précédentes, **caractérisée en ce que** l'unité de commande (9) est adaptée pour établir une connexion avec des dispositifs de communication sans fil.
